# FASCICULE DE BREVET EUROPEEN

(11) **EP 4 078 416 B1**
(45) Date de publication et mention de la délivrance du brevet: **18.02.2026**
(21) Numéro de dépôt: 20824273.5
(22) Date de dépôt: 17.12.2020
(51) Int. Cl.: G06F 21/55, G06F 11/34

(54) **PROCÉDÉ DE CONTRÔLE D'UN SYSTÈME ÉLECTRONIQUE PAR COMPTEURS DE PERFORMANCE BAS NIVEAUX ET COMPRENANT AU MOINS UN ENSEMBLE D'APPLICATIF(S) LOGICIELS NON MAÎTRISÉS S'EXÉCUTANT SUR UN PROCESSEUR ET UN DISPOSITIF DE CONTRÔLE**
VERFAHREN ZUR ÜBERWACHUNG EINES ELEKTRONISCHEN SYSTEMS MIT LOW-LEVEL-LEISTUNGSZÄHLERN UND MIT MINDESTENS EINEM SATZ UNKONTROLLIERTER SOFTWAREANWENDUNGEN, DIE AUF EINEM PROZESSOR AUSGEFÜHRT WERDEN, UND EINE ÜBERWACHUNGSEINRICHTUNG
METHOD FOR MONITORING AN ELECTRONIC SYSTEM USING LOW-LEVEL PERFORMANCE COUNTERS AND COMPRISING AT LEAST ONE SET OF UNCONTROLLED SOFTWARE APPLICATIONS THAT ARE EXECUTED ON A PROCESSOR, AND A MONITORING DEVICE

(30) Priorité: 19.12.2019 FR 1914817
(43) Date de publication de la demande: 26.10.2022
(73) Titulaire: THALES, 92400 Courbevoie (FR)
(72) Inventeur: BONNAFOUX, Luc, 92622 GENNEVILLIERS CEDEX (FR); BENAMIRA, Adrien, 92622 GENNEVILLIERS CEDEX (FR); DUPREZ, Adrien, 92622 GENNEVILLIERS CEDEX (FR)
(74) Mandataire: Lavoix
(86) Numéro de dépôt international: PCT/EP2020/086675
(87) Numéro de publication internationale: WO 2021/122920

(56) Documents cités:
- US-A1- 2015 161 024
- US-A1- 2018 018 456
- US-A1- 2019 347 410

## Description

La présente invention concerne, de manière générale, le domaine de la sécurisation de systèmes électroniques par détection d'anomalies, et plus spécifiquement les méthodes et l'appareillage pour le contrôle de plateforme embarquée électronique susceptible de supporter un ou plusieurs applicatifs logiciels non maitrisé par l'industriel créateur de la plateforme.

En effet, il est nécessaire de pouvoir s'assurer que ces applicatifs agissent bien selon le comportement attendu de leur part et également qu'ils ne cherchent pas à tirer profit du système développé par l'industriel, les risques étant par exemple :
- la rétro-conception de technologie de l'industriel ayant fabriqué le système informatique : code, savoir-faire... ;
- la récupération d'éléments secrets de l'industriel : certificats, clés... ;
- le détournement du système à des fins non-prévues par l'industriel.

Il est important de noter que les clients ont la liberté d'installer les applicatifs qu'ils souhaitent et qu'une fois les systèmes livrés aux clients, l'industriel n'aura plus la possibilité d'examiner en détails chaque logiciel que les clients utilisent.

Il s'agit donc de surveiller le comportement des applicatifs non maîtrisés en observant leurs interactions avec le système.

On connaît les anti-virus, qui, pour la plupart, comparent les signatures des binaires à des bases de données de signature de malwares connus. Cette approche n'est cependant pas satisfaisante car il n'est pas possible de constituer et maintenir à jour une base de données de tous les malwares.

On connaît également les « Hardware Performance Counters », notés ci-après compteurs HPC, présents dans une majorité des architectures de processeurs modernes (INTEL, ARM, AMD) et GPU (NVIDIA). L'utilisation première de ces compteurs est l'optimisation de code. Cependant leur fonction peut être détournée pour faire de la surveillance de logiciel. Ces compteurs ont déjà été employés pour observer des comportements anormaux précis tels que la détection d'attaques ROP ou d'attaques sur le cache mémoire. Par exemple, le brevet US 2019/0130101 décrit une méthode pour détecter les attaques par canaux cachés, notamment les attaques « Spectre » et « Meltdown ».

US 2018/018456 A1 décrit un dispositif de contrôle du fonctionnement d'un système électronique comprenant un ensemble d'applicatifs.

US 2015/161024 A1 décrit un procédé de contrôle d'une résilience d'un modèle d'apprentissage machine face à une cyber-attaque.

US 2019/347410 A1 décrit un système de contrôle du fonctionnement d'un système électronique comprenant un ensemble d'applicatifs.

Il existe un besoin d'accroître encore la sécurité des systèmes informatiques accueillant des applicatifs non maîtrisés.

A cet effet, suivant un premier aspect, l'invention propose un procédé de contrôle du fonctionnement d'un système électronique selon la revendication 1.

Par exemple, dans le cas d'un smartphone, d'une smart TV ou même d'une console de jeux, l'appareil et la méthode permettent de s'assurer que l'application utilisée par le client qui s'exécute est bien une application légitime et non un processus malveillant.

L'approche selon l'invention diffère des précédentes par au moins deux points. Le premier est qu'elle se focalise sur le contrôle de plateforme et non exclusivement sur la détection d'attaques connues et ciblées. Cette approche plus générale amène au second point : injecter une notion de causalité à travers la prise en compte de l'action de l'utilisateur dès la phase d'apprentissage pour prédire l'action réelle de l'appareil.

Dans des modes de réalisation, le procédé de contrôle suivant l'invention est selon la revendication 2 ou 3.

Suivant un deuxième aspect, la présente invention propose un programme d'ordinateur selon la revendication 4.

Suivant un troisième aspect, la présente invention propose un dispositif de contrôle du fonctionnement d'un système électronique selon l'une quelconque des revendications 5 à 7.

Suivant un quatrième aspect, la présente invention propose un système électronique selon la revendication 8..

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 représente une vue d'un système informatique dans un mode de réalisation de l'invention ;
[Fig 2] la figure 2 est un organigramme d'étapes mises en œuvre dans un mode de réalisation de l'invention ;
[Fig 3] la figure 3 est une vue illustrant les étapes de la figure 2 dans un mode de réalisation de l'invention ;
[Fig 4] la figure 4 est une vue fonctionnelle d'un module d'apprentissage mis en œuvre dans un mode de réalisation de l'invention ;
[Fig 5] la figure 5 est une vue illustrant l'entraînement des modèles MOD_{feat} et MOD_{INV} de la figure 4 dans un mode de réalisation de l'invention ;
[Fig 6] la figure 6 est une vue illustrant l'entraînement du modèle MOD_{FWD} de la figure 4 dans un mode de réalisation de l'invention ;
[Fig 7] la figure 7 est une vue illustrant la constitution de la base de données de référence dans un mode de réalisation de l'invention ;
[Fig 8] la figure 8 est une vue l'ensemble 200 d'étapes d'un procédé dans un mode de réalisation de l'invention.

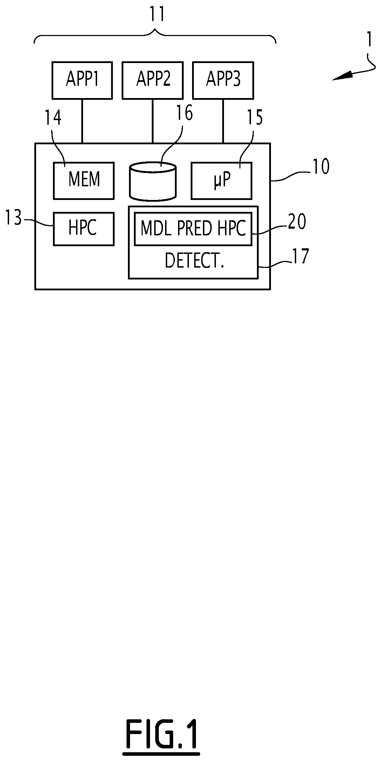

La figure 1 représente un système électronique 1 dans un mode de réalisation de l'invention, par exemple un smartphone 1. Dans d'autre modes de réalisation, le système 1 sera par exemple un ordinateur, une tablette, une télévision connectée (« smart TV »), un système électronique embarqué (par exemple de navigation routière, aérienne) ...

Le système informatique 1 comporte une ou plusieurs applications d'un ensemble 11 d'applications APP1, APP2, APP3 ..., un module de traitement 10 comprenant une unité de surveillance 13, une mémoire 14, un processeur 15, une base de données de référence 16 et un module électronique de détection d'anomalie 17.

Le module électronique de détection d'anomalie 17 comprend un modèle de prédiction HPC 20.

L'ensemble 11 d'applications considéré comprend par exemple un ou plusieurs applications, éventuellement chargeables par l'utilisateur, parmi un bloc électronique de fourniture forme d'onde adapté pour générer une forme d'onde, un bloc radio utilisant ladite forme d'onde délivrée par le bloc électronique de fourniture forme d'onde, un bloc électronique vocodeur, un bloc de cryptographie ... chacun de ces blocs comprend une partie logicielle réagissant à des actions d'utilisateur du système et comprenant des instructions logicielles s'exécutant sur le processeur 15 ou encore donnant lieu à l'exécution d'instructions logicielles sur le processeur 15.

On notera que les actions d'utilisateur dans leur interfaçage avec les applications de l'ensemble d'applications 11 donnent lieu à des sous-actions. Par exemple, quand l'utilisateur réalise l'action de lancer le processus firefox^{®}, cela déclenche de nombreuses actions réalisées par ce dernier, notamment un processus de chiffrement pour vérifier le https de la page. Le niveau de granularité de chaque action considérée selon l'invention est définie (pour un processus de chiffrement par exemple, on peut se contenter d'un seul étiquetage « action » ou bien diviser l'action en sous-actions, par exemple de génération clef, stockage clef etc.).

L'unité de surveillance 13 est une unité de surveillance des performances du processeur et comprend les registres dits HPC (« hardware performance counters »), qui, de façon connue, sont adaptés pour compter le nombre d'occurrences d'activités matérielles, telles que le nombre total d'instructions, le nombre total de branches, le nombre total de cycles, le nombre total d'accès au cache L3. Le relevé des performances peut être associé à un processus P et est réalisé à une fréquence f.

On appellera ci-après HPC(t) le vecteur comprenant les valeurs de chaque registre HPC considéré à l'instant t. On appelle s_{T} la série temporelle des HPC(t) entre le temps T-1 et le temps T. Le délai T0 de la fenêtre temporelle entre T-1 et T est par exemple de 10 ms et le nombre d'échantillons de HPC(t) dans la fenêtre temporelle est compris d'environ 20 points par fenêtres pour N fenêtres, typiquement N= 5. Ces paramètres sont ajustables, notamment en fonction de la fréquence de fonctionnement du processus à surveiller. De même, il est important aussi de noter qu'un changement de base peut être effectué et nous pouvons avoir les valeurs d'un HPC en fonction d'autre HPC.

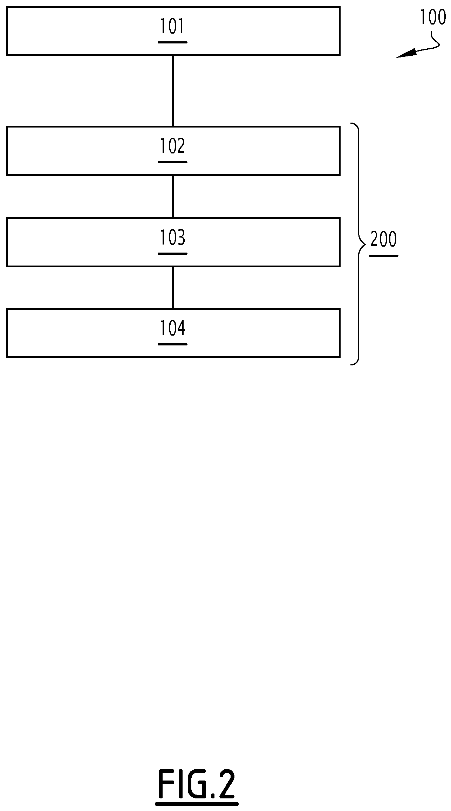

Sur la figure 2, un ensemble 100 d'étapes mises en œuvre selon l'invention est représenté.

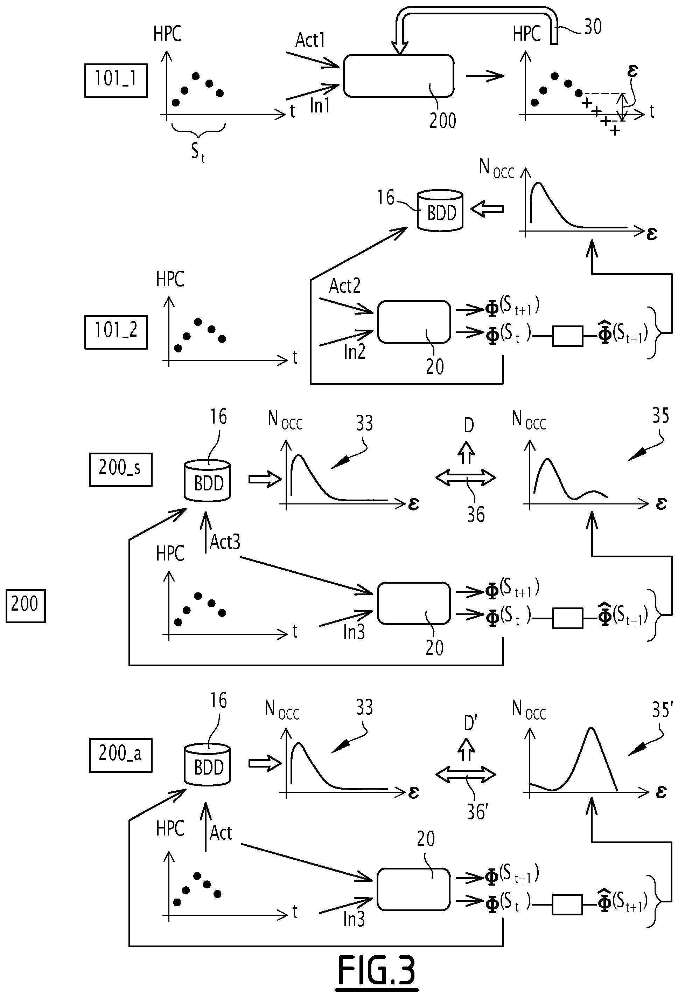

Dans une étape 101 préalable, visant à générer un modèle de prédiction HPC 20 et une base de donnée de référence permettant la détection d'anomalies de fonctionnement d'un système apte à héberger des applications de l'ensemble 11 d'applications, tel que le système 1 :
- un processus d'apprentissage machine est mis en œuvre au cours d'une sous-étape 101_1 illustrée en figure 3, sur une plateforme électronique d'apprentissage (non représentée), fournissant le modèle de prédiction HPC 20 ; et
- la base de données de référence 16 est constituée, au cours d'une sous-étape 101_2 illustrée en figure 3.

Dans un mode de réalisation le système 1 est contraint, i.e. le champ de l'ensemble 11 d'applicatifs pouvant être accueillis est limité ; ces applicatifs proviennent par exemple des clients utilisant le système 1 ou de COTS (non représentés) intégrés au système 1 et l'étape 101 du procédé selon l'invention est appliqué pour construire un module de détection d'anomalie 17 construit en fonction de ce champ limité d'applicatifs pouvant être accueillis.

Dans la sous-étape 101_1, en fonction de données d'entrée de test représentatives des comportements attendus (à l'exclusion de comportements non souhaités) des applications de l'ensemble d'applications 11, et comprenant des séries de valeurs HPC sur des fenêtres temporelles, et les actions utilisateurs (et sous-actions correspondantes) (référencées act) survenant pendant ces fenêtres temporelles, le modèle de prédiction HPC 20 est généré par apprentissage machine ; l'erreur de prédiction ε entre les valeurs HPC de test d'une série s_{T+1} et les valeurs HPC prédites entre T et T+1 par le modèle en cours de construction 200 à partir de la série de test s_{T} et des actions survenues dans la fenêtre temporelle correspondante, entre T-N et T, est itérativement rétro-propagée (flèche 30) dans le modèle de prédiction alors en cours de construction (bloc 200).

Le modèle de prédiction HPC 20 est une fonction algorithmique prédisant la valeur la valeur de la série HPC de t =T à T+1 en fonction de la série des valeurs HPC de t= T-N à T et des actions survenant pendant cette même fenêtre temporelle.

Dans la sous-étape 101_2, en référence à la figure 3, la base de données de référence 16 est constituée, comprenant, classées pour chaque type d'action, des caractéristiques types de l'erreur existant entre les valeurs HPC de test et les valeurs HPC prédites par le modèle de prédiction HPC 20 issu de la sous-étape 101_1. Ces caractéristiques types sont déterminées à partir de séries temporelles de test de valeurs HPC et d'actions utilisateurs.

Dans un mode de réalisation, les caractéristiques types sont formalisées par un histogramme, dit histogramme de référence, indiquant en abscisse les valeurs d'erreur et en ordonnée le nombre d'occurrences N_{OCC} de chaque valeur d'erreur survenant par exemple, pendant une fenêtre de durée T0, à une précision D.

La plate-forme d'apprentissage automatique et de constitution de la base de donnée de référence 16 comprend par exemple une base de données pour stocker les données de test, une mémoire de travail et un processeur, ainsi qu'au moins un réseau de neurones (par exemple de type apprentissage profond) ou toutes nouvelles technologies liées aux séries temporelles.

Ensuite, dans une phase ultérieure d'exploitation opérationnelle de détection de non conformité, encore appelée phase d'inférence, pendant le fonctionnement du système 1 tel qu'utilisé par l'utilisateur, l'ensemble d'étapes 200 figurant en figure 2, comprenant les étapes 102, 103 et 104, est mis en œuvre par le module électronique de détection d'anomalie 17 intégrant le modèle de prédiction 20 et la base de données de référence 16 issus de l'étape 101.

Au cours de l'étape 102, le module de détection d'anomalie 17 obtient auprès de l'unité de surveillance 13 les valeurs courantes des compteurs HPC échantillonnées sur des fenêtres d'observation successives et il obtient en outre les actions d'utilisateur survenues pendant ces fenêtres temporelles.

Au cours de l'étape 103, ces actions et valeurs HPC chaque série s_{T} à s_{T-N}, relatives à chaque fenêtre d'observation de t= T-1 à T, sont fournies en entrée du modèle de prédiction HPC 20, qui prédit en fonction les valeurs HPC futures de t= T à T+1.

Puis au cours de l'étape 104, le module de détection d'anomalie 17 :
- calcule l'erreur entre les valeurs courantes obtenues et les valeurs prédites sur la fenêtre d'observation ;
- en déduit les caractéristiques d'erreur correspondantes, dans le cas présent l'histogramme d'erreur ;
- extrait les histogrammes d'erreur de référence classés dans la base de données de référence 16 correspondant à chaque action obtenue à l'étape 102, compare l'histogramme d'erreur calculé à partir de la fenêtre d'observation courante et entre chaque histogramme extrait et détermine, en fonction des écarts constatés lors de la comparaison s'il y a anomalie ou non dans le comportement courant du système 1 ;
- en cas de détection d'anomalie, déclenche une alerte destinée à être traitée en fonction de la politique de sécurité configurable par un administrateur. Par exemple, enregistrement d'une alerte dans un journal, ou arrêt de l'applicatif.

Par exemple, la présence ou l'absence d'une anomalie est décidée en effectuant un test de Kolmogorov-Smirnov selon p-value P_{KS} entre les distributions des histogrammes comparés.

En référence à la figure 3, l'ensemble 200 des étapes 102 à 104 est illustrée :
- dans un cas standard, référencé 200_s et correspondant à une absence d'anomalie, l'histogramme calculé étant référencé 35, un histogramme de référence extrait étant référencé 33, la comparaison 36 donnant lieu à une décision D d'absence d'anomalie ;
- dans un cas de détection d'anomalie, référencé 200_a, l'histogramme calculé étant référencé 35', l'histogramme de référence extrait étant référencé 33, la comparaison 36' donnant lieu à une décision D' de présence d'anomalie.

Dans un mode de réalisation, la mémoire 14 comprend un ensemble d'instructions logicielles, qui lorsqu'elles sont exécutées sur le processeur 15, mettent en œuvre l'ensemble d'étapes 200 décrit ci-dessus.

Dans un autre mode de réalisation, le module de détection d'anomalie 17 est réalisés chacun sous forme d'un composant logique programmable, tel qu'un FPGA (de l'anglais Field Programmable Gate Array), ou encore sous forme d'un circuit intégré dédié, tel qu'un ASIC (de l'anglais Applications Specific Integrated Circuit).

L'observation bas niveau de l'applicatif, au moyen des HPCs, permet de récolter une masse importante de données qui caractérisent de façon précise le système 1 et son fonctionnement. La solution est basée sur un pipeline qui détecte un changement de comportement du système selon un certain niveau d'exigence. Pour cela, la solution comprend une phase d'entraînement du modèle d'apprentissage (profond ou non) en zone blanche selon les critères attendus, puis une deuxième phase de constitution d'une base de données indexée selon l'action de l'applicatif utilisateur, qui stocke l'-histogramme d'- erreur de prédiction du modèle sur des séries temporelles standards et à définir au préalable et enfin, une phase d'évaluation réelle. La notion de causalité à travers de l'action de l'utilisateur est injectée dès la phase d'apprentissage dans le modèle.

L'invention prenant en compte les actions permet ainsi de détecter les anomalies liées à un usage des applications qui seraient différents de leur comportement attendu. Elle permet de répondre à un besoin de contrôle d'un système fourni à un client et non pas uniquement à un besoin de détection d'attaque. Elle confère en outre une meilleure interprétabilité des résultats proposés par le module de contrôle.

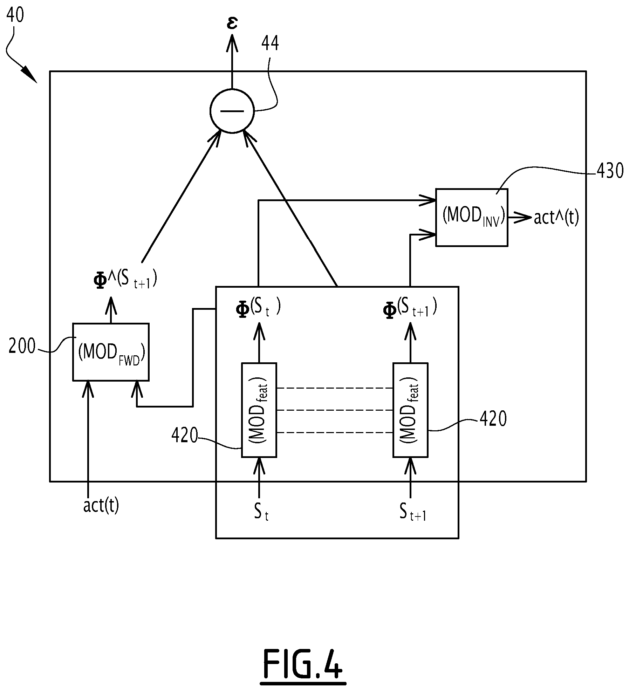

Un mode de réalisation particulier est maintenant décrit en référence aux figures 4 à 8, prenant en considération que dans les séries temporelles s_{T} de valeurs HPC, deux types d'information sont contenues :
(1) les actions de l'utilisateur (et sous-actions induites) que le modèle de prédiction HPC 20 ne peut pas contrôler mais qui l'affectent ;
(2) les choses hors du contrôle du modèle et de l'utilisateur et qui ne doivent pas affecter le modèle de prédiction HPC 20.

En outre, il est considéré là que N=1, mais toute valeur entière de N supérieure à 1 peut également être choisie.

Les informations de type 1 comprennent par exemple l'action de changer/arrêter un processus pour en lancer un autre, de charger des librairies, d'écrire des données dans la mémoire, de lire des données dans la mémoire, de compresser des fichiers, de chiffrer des fichiers...

Les informations de type 2 comprennent par exemple le déterminisme de l'environnement), une mise en veille du processus pour réaliser d'autres processus d'arrière-plan ("background") comme des mises à jours, un ralentissement du téléphone, son vieillissement, une hausse de température.

Un espace de représentation pour les données doit modéliser les informations de type 1 et ne pas être affecté par celles de type 2.

A cette fin, dans un mode de réalisation particulier, la plate-forme d'apprentissage automatique et de constitution de la base de donnée de référence 16 comprend le module de traitement 40 représenté en figure 4, qui est utilisé pour mettre en œuvre l'étape 101.

Le module de traitement 40 comprend des modèles et un soustracteur 44. Les modèles du module de traitement 40 sont représentés sur la figure 4 sous leur forme d'apprentissage : ils sont ainsi nommés respectivement modèle de prédiction (MOD_{FWD} 200), modèle inverse (MOD_{INV} 430), et modèle d'extraction 420 (MOD_{FEAT} 200), et correspondent une fois leur apprentissage automatique respectif achevé, respectivement aux modèles de prédiction MOD_{FWD} 20, inverse MOD_{INV} 43, et d'extraction MOD_{feat} 42.

Le modèle d'extraction MOD_{feat} 420 est adapté pour extraire l'information utile, i.e. l'information de type 1, des vecteurs HPC de chaque série d'observation st et pour la condenser sous forme de vecteur Φ(sₜ).

Le modèle MOD_{FWD} 20 est adapté pour prédire Φ(sₜ₊₁) en fonction de Φ(sₜ) et de l'action utilisateur à l'instant, nommé act(t) : on nomme Φ^(sₜ₊₁) ce résultat de prédiction de Φ(sₜ₊₁) par MOD_{FWD} 20 en fonction de Φ(sₜ) et act(t).

Le soustracteur 44 calcule la différence entre Φ^(sₜ₊₁) et Φ(sₜ₊₁), constituant l'erreur de prédiction ε décrite plus haut relativement à la sous-étape 101_1, qui va être rétro-propagée dans le modèle de prédiction MOD_{FWD} 20.

Le modèle inverse MOD_{INV} 43 est adapté pour déterminer quelle est l'action act(t) en fonction de Φ(sₜ) et Φ(sₜ₊₁). L'action déterminée est nommée act^(t).

Dans un tel mode de réalisation, dans l'étape 101 préalable, l'apprentissage automatique a donc lieu en deux temps dans la sous-étape 101_1.

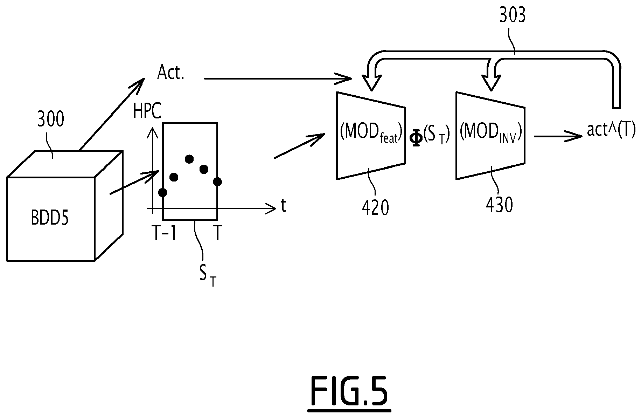

Dans un premier temps ont lieu les apprentissages automatiques des modèles MOD_{feat} 420 et MOD_{INV} 43, comme représenté en figure 5, en utilisant l'action de l'utilisateur ou les sous-actions consécutives : la base de données BDD5 300 comporte des séries temporelles s_{T}, dites d'entraînement, de valeurs HPC et d'actions correspondantes correspondant à des processus « légaux », i.e. des comportements attendus, maîtrisés qui sont données en apprentissage au modèle en cours de construction (« MOD_{feat} 420 ») ; les prédictions Φ^(s_{T+1}) résultantes sont données en apprentissage au modèle (MOD_{INV} 430) alors en cours de construction; les prédictions d'actions act^(T) sont comparées avec les actions act(T) et les erreurs de prédiction issues des comparaison à chaque série temporelle considérée sont rétro-progagées (flèche 303) dans les deux modèles en cours d'apprentissage (MOD_{feat} 420 pour l'erreur sur Φ) et (MOD_{INV} 430 pour l'erreur sur l'action).

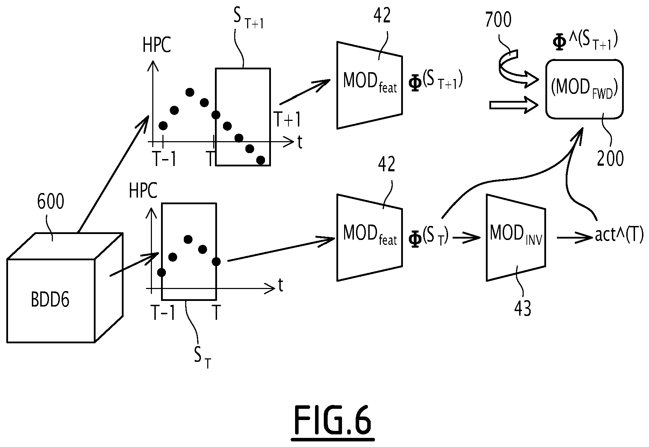

Puis dans un second temps, l'apprentissage automatique du modèle de prédiction MOD_{FWD} 20 a lieu, comme représenté schématiquement en figure 6. La base de données BDD6 600 (qui est, dans le cas considéré, la même que la BDD5 300 en FIG 5) comporte des séries temporelles s_{T}, dites d'entraînement, de valeurs HPC et d'actions correspondantes correspondant à des processus « légaux », i.e. des comportements attendus, maîtrisés qui sont utilisées en apprentissage du modèle de prédiction MOD_{FWD} alors en cours de construction (bloc « (MOD_{FWD} 200) » ) ; la représentation Φ(s_{T+1}) est déterminée par le modèle MOD_{feat} 42 en fonction de s_{T+1} ; la représentation Φ(s_{T}) déterminée par le modèle MOD_{feat} 42 en fonction de s_{T} est donnée au modèle MOD_{INV} 43 qui estime l'action act^(T) en fonction de ce Φ(s_{T}) ; Φ(s_{T}) et act^(T) sont données en entrée du modèle MOD_{FWD} alors en cours de construction (bloc « (MOD_{FWD} 200) ») qui détermine alors Φ^(s_{T+1}) en fonction de ces entrées ; et l'erreur entre Φ^(s_{T+1}) et Φ(s_{T+1}) est rétro-progagée (flèche 700) dans le modèle en cours d'apprentissage MOD_{FWD} (bloc (MOD_{FWD} 200)).

Par exemple, le modèle MOD_{feat} 42 peut être implémenté par apprentissage machine avec une cellule de LSTM (réseau de neurones récurrents « Long Short-Term Memory »). Par exemple un modèle de type « autoencoder » est utilisé pour le modèle MOD_{FWD} 20 et un modèle de type « perceptrons multicouche » est utilisé pour le modèle MOD_{INV} 43. Toutefois ces modèles peuvent être généralisés à d'autres modèles : Transformer, VAE etc.

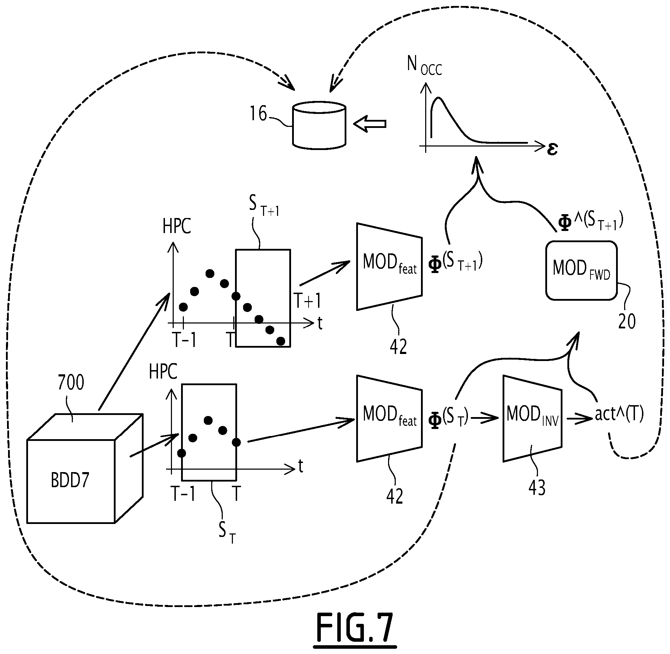

Dans la sous-étape 101_2, la base de données de référence 16 est construite comme représenté schématiquement en figure 7 : la base de données BDD7 700 comporte des séries temporelles s_{T}, dites d'entraînement, de valeurs HPC et d'actions correspondantes correspondant à des processus « légaux », i.e. des comportements attendus, maîtrisés ; la représentation Φ(s_{T+1}) est déterminée par le modèle MOD_{feat} 42 en fonction de s_{T+1} ; la représentation Φ(s_{T}) déterminée par le modèle MOD_{feat} 42 en fonction de s(T) est donnée au modèle MOD_{INV} 43 qui estime l'action act^(T) en fonction de ce Φ(s_{T}) ; Φ( s_{T}) et act^(T) sont données en entrée du modèle MOD_{FWD} 20 qui détermine alors Φ^(s_{T+1}) en fonction de ces entrées ; et l'histogramme d'erreur entre Φ^(s_{T+1}) et Φ(s_{T+1}) est estimé. Les pointillés en figure 7 illustrent l'indexation de la base de données 16 par act^(T) et Φ(s_{T}).

Des histogrammes d'erreur de référence par action sont ainsi déterminés et classés par action dans la base de données de référence 16.

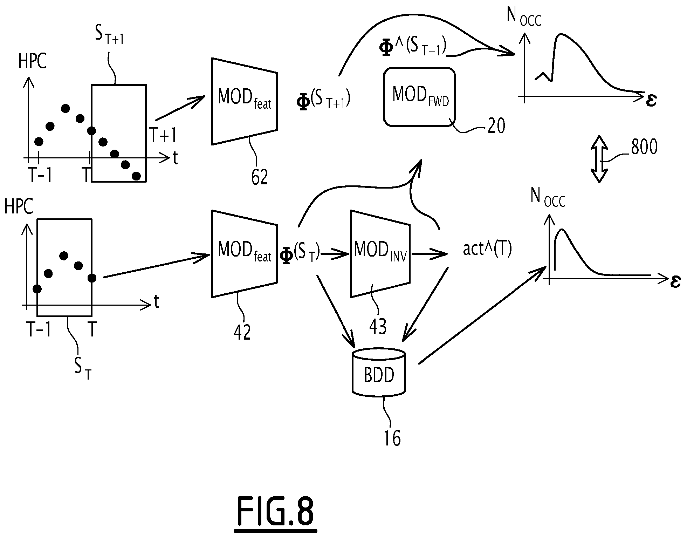

La figure 8 illustre, dans le mode de réalisation particulier considéré la phase d'exploitation opérationnelle de détection d'anomalies, pendant le fonctionnement du système 1 comprenant le module électronique de détection d'anomalie 17 comprenant les modèles MOD_{FWD} 20, MOD_{feat} 42 (et optionnellement MOD_{INV} 43) et la base de données 16 résultant des opérations décrites ci-dessus en référence aux figures 4-7. Les séries temporelles s(T) de valeurs HPC et d'actions correspondantes correspondant à des processus indéterminés (i.e. pouvant être « légaux » ou non) sont fournies successivement en entrée du module électronique de détection d'anomalie 17 ; la représentation Φ(T+1) est déterminée par le modèle MOD_{feat} 42 en fonction de s(T+1) ; la représentation Φ(s_{T}) déterminée par le modèle MOD_{feat} 42 en fonction de s(T) est donnée au modèle MOD_{INV} 43 qui estime l'action act^(T) en fonction de ce Φ(s_{T}) ; Φ( s_{T}) et act^(T) (ou l'action collectée act(T) suivant les modes de réalisation) sont données en entrée du modèle MOD_{FWD} 20 qui détermine alors Φ^(s_{T+1}) en fonction de ces entrées ; et l'histogramme d'erreur courant entre Φ^( s_{T+1}) et Φ(s_{T+1}) est calculé en fonction des écarts entre Φ^( s_{T+1}) et Φ(s_{T+1}). Le module électronique de détection d'anomalie 17 extrait de la base de données 16 l'histogramme de référence correspondant à l'action act^(T) (ou l'action collectée act(T) suivant les modes de réalisation) et la comparaison 800 entre les histogrammes de référence et courant permet au module électronique de détection d'anomalie 17 de détecter la présence ou non d'une anomalie.

On notera que le modèle MOD_{FWD} 20 est appris à partir de la représentation Φ(t) extraites des données HPC (t) et non directement à partir de la série temporelle s_{T} des valeurs HPC. En outre, pendant la phase d'évaluation 200, la prédiction est effectuée également à partir de la représentation Φ(S_{T}). L'erreur de prédiction est déduite dans le mode de réalisation particulier décrit non pas à partir de valeurs expérimentales des HPC, mais de leur représentation Φ(s). Cette dernière peut être entachée d'une erreur, même minime. Être robuste à cette erreur fait la force du modèle. Ces dispositions permettent de diminuer le nombre de faux positifs et d'améliorer l'interprétation des résultats.

Dans un mode de réalisation, la base de référence 16 comprend des histogrammes relatifs à des processus bénins et malins, étiquetés comme tels, permettant ainsi d'établir une politique de filtrage soit en mode white list soit en mode black list en fonction des besoins du système.

Ainsi l'invention propose une solution de contrôle, sous forme d'un procédé ou d'un dispositif, d'un système électronique comprenant un ensemble d'applicatifs clients non maîtrisés par l'administrateur du système électronique, permettant de contrôler la conformité de chaque applicatif client à la politique de contrôle mise en place par l'administrateur en se basant sur le relevé des valeurs des HPCs pour chaque applicatif et l'action nominale attendue de l'applicatif client.

Elle présente dans des modes de réalisation certains au moins des caractéristiques décrits ci-dessous.

Elle s'appuie ainsi sur un module de relevé et d'organisation des HPC permettant le relevé des valeurs des HPCs des processus liés aux applicatifs et l'organisation desdites valeurs dans des fenêtres temporelles s_{T} sous la forme d'une matrice de valeur.

Un module de calcul permet de prédire pour un applicatif une représentation de son état futur à partir de l'état courant de l'applicatif caractérisé par les fenêtres s_{T-N} à s_{T} et l'action attendue A_{T}, ou sous-action, de l'applicatif.

Un générateur d'histogramme de l'erreur génère les histogrammes d'erreur entre l'état de représentation prédit et l'état de représentation réel.

Une base de données de référence est indexée par l'action, ou sous-action, et l'état de l'applicatif en cours d'analyse.

Un module d'analyse détecte la présence d'une anomalie ou non dans les relevés et est en charge de remonter une alerte.

Le module de relevé et d'organisation des HPC relève les HPC attachés à un processus P selon des fenêtres temporelles s_{T} durant une plage T0 à une fréquence f ; en outre la matrice de valeur produite par le module peut comporter une indication temporelle ; le module de relevé pouvant aussi se baser sur le nombre de cycles CPU pour cadencer les échantillonnages.

Le module de calcul contient par exemple trois modèles :
- le premier étant l'extracteur d'information utile Φ(s_{T}) à partir de l'entrée s_{T} relevée par le module de relevé et d'organisation ;
- le deuxième étant le prédicteur de l'action, ou sous-action, de l'utilisateur a_{T} à partir de Φ(s_{T}),
- le troisième prédit l'information utile à l'instant t+1 : Φ^(s_{T+1}) à partir de Φ(s_{T}).

Les modèles utilisés par le module de calcul sont basés sur un mécanisme de cellule de neurones récurrents pour le premier modèle, sur tout modèle utilisant sur des mécanismes d'attention pour les premier et deuxième modèles, et tout modèle de la famille des autoencoders, déterministes ou bayésien pour le troisième modèle

Le générateur d'histogramme calcule par exemple l'histogramme, à une précision souhaitée D, de l'erreur quadratique, absolue, ou autre, entre Φ^(s_{T+1}) et Φ(s_{T+1}), ledit histogramme représentant la déviation de l'estimation de l'information utile de la série temporelle.

La base de données de référence contient par exemple des scénarios bénins ou malins d'histogrammes d'étalonnage, ces histogrammes représentant la déviation de l'estimation de l'information utile de la série temporelle pour des applicatifs maîtrisés, et étant indexée par les actions, ou sous-actions, a_{T} et Φ(s_{T}).

Le module d'analyse permettant dans un premier temps de trouver l'histogramme de référence de la base de donnée le plus proche de Φ(s_{T}), puis de réaliser le test de Kolmogorov-Smirnov afin d'établir la probabilité P_{KS} que les histogrammes soient issus de la même distribution et enfin de comparer cette probabilité à la valeur de confiance α, entre 0 et 100, paramétrable par l'administrateur de la plateforme, et qui représente le niveau d'exigence souhaité par l'administrateur, le module déclenchant, si P_{KS} < α, une alerte destinée à être traitée en fonction de la politique de sécurité configurable par l'administrateur.

Une phase initiale est constituée séquentiellement d'une phase d'apprentissage réalisée par un module d'entraînement spécifique, suivie d'une phase de constitution de la base de donnée de référence.

La phase d'apprentissage comprend les étapes suivantes:
- obtention des données d'apprentissage, séries temporelles s_{T} et actions ou sous-actions, associées a_{T} pour tout T et tirées d'un ensemble d'applicatifs de référence pour l'apprentissage à l'aide du module de relevé et d'organisation des HPCs;
- mise en œuvre d'un premier processus d'apprentissage machine générant, en fonction de données d'entrée s_{T} et de sortie a_{T}, pour tout T, les deux premiers modèles algorithmiques du module de calcul fournissant dans un premier temps Φ(s_{T}) puis dans un second temps les classes d'actions estimées ;
- à la suite, mise en œuvre d'un deuxième processus d'apprentissage machine générant à l'aide du troisième modèle du module de calcul, en fonction de données d'entrée Φ(s_{T-N}) jusqu'à Φ(s_{T}) et de sortie Φ(s_{T+1}), pour tout T, la valeur Φ^(s_{T+1}).
   La phase de constitution de la base de donnée de référence comprend les étapes suivantes:
      - obtention des données de constitution de la base de données de référence, séries temporelles s_{T} et actions ou sous-actions, associées a_{T} pour tout T et tirées d'un ensemble d'applicatifs d'étalonnage pour la constitution de la base de données de référence à l'aide du module de relevé et d'organisation des HPCs ;
      - obtention par le module de calcul en phase d'évaluation valeurs D(s_{T+1}) et Φ^(s_{T+1}) pour chaque T ;
      - obtention par le générateur d'histogramme de l'histogramme de déviation pour chaque T entre Φ(s_{T+1})et Φ^(s_{T+1}) ;
      - indexation de l'histogramme précédent et ainsi, pour tout T, création de la base de données de référence.
   Lors de la phase ultérieure, la détection d'anomalie comprend :
      - obtention des données en phase de test, séries temporelles s_{T} et actions ou sous-action, associées a_{T} pour tout T et générées à l'aide du module de relevé et d'organisation des HPCs;
      - obtention par le module de calcul en phase d'évaluation des valeurs Φ(s_{T+1}) et Φ^(s_{T+1}) pour chaque T ;
      - obtention par le générateur d'histogramme de l'histogramme de déviation pour chaque T entre Φ(s_{T+1})et Φ^(s_{T+1}) ;
      - obtention, par le module d'analyse de l'histogramme de référence dans la base de donnée le plus proche de Φ(s_{T}), puis par le test de Kolmogorov-Smirnov, obtention de la probabilité P_{KS}, puis comparaison avec le paramètre de confiance configurable α.

## Revendications

1. Procédé de contrôle du fonctionnement d'un système électronique (1) comprenant un ensemble (11) d'applicatif(s), un processeur (15) sur lequel chaque applicatif de l'ensemble d'applicatif(s) s'exécute suite à des actions d'utilisateur du système, le système calculant des valeurs successives de compteur(s) d'un ensemble de compteur(s) de performance HPC du processeur prises suite auxdites actions d'utilisateur ;
ledit procédé comprenant les étapes suivantes pendant une phase opérationnelle de contrôle :
- prédiction par un premier modèle algorithmique de valeurs prochaines de HPC en fonction de données d'entrée dudit modèle comprenant des valeurs calculées courantes de HPC ; ledit premier modèle étant issu d'un premier processus d'apprentissage machine mis en œuvre lors d'une phase préalable et générant, en fonction de données d'entrée d'apprentissage comprenant des valeurs successives HPC, ledit premier modèle algorithmique (20) ;
- vérifier la conformité de fonctionnement du système par un module électronique de contrôle (17) en fonction de caractéristique(s) d'une première déviation calculée entre des premières valeurs calculées des compteurs de performance HPC du processeur et des premières valeurs de HPC prédites par le premier modèle algorithmique ; et déclenchement d'une alerte par ledit module électronique de contrôle dès détection d'une non-conformité ;
pendant la phase opérationnelle, les données d'entrée dudit premier modèle comprenant en outre au moins des actions d'utilisateur, ledit premier modèle algorithmique déterminé prédit des valeurs prochaines de HPC en fonction de valeurs courantes de HPC et au moins d'actions d'utilisateur ; ledit premier modèle ayant été appris, pendant la phase préalable, sur des données d'entrée dudit premier apprentissage machine comprenant en outre au moins des actions d'utilisateur parmi une liste d'actions déterminées,
ledit procédé étant **caractérisé en ce que** :
selon lequel, lors de la phase préalable et à l'issue de la phase d'entraînement, les étapes suivantes sont mises en œuvre à l'aide d'un module électronique de traitement (10) :
- obtention, pendant des fenêtres de test, de séries temporelles de valeurs de compteurs HPC de test et des actions respectives d'utilisateur associées ;
- pour chaque série temporelle de test obtenue associée à une action d'utilisateur, fourniture par le modèle algorithmique d'une série temporelle correspondante de valeurs prédites de HPC en fonction de ladite série temporelle obtenue et de l'action d'utilisateur associée ;
- calcul de la déviation entre chaque série temporelle de test obtenue et la série temporelle de valeurs prédites correspondante ;
- détermination, en fonction desdites déviations calculées, d'une base de données de déviations de référence indiquant, pour chaque action utilisateur de la liste déterminée, des caractéristiques respectives de déviation de référence ;
et selon lequel lors de la phase ultérieure, la détection de non-conformité comprend :
- la sélection dans la base de données de déviations de référence, de caractéristique(s) de déviation de référence correspondant à une action d'utilisateur associée auxdites premières valeurs courantes ; et
- la comparaison entre lesdites caractéristique(s) de déviation de référence sélectionnée(s) et de première déviation.

2. Procédé de contrôle dans le fonctionnement d'un système électronique (1) selon la revendication précédente, selon lequel la caractéristique de déviation de référence, respectivement de première déviation, comprend un histogramme de référence du nombre d'occurrences des déviations en fonction des valeurs de déviations et la comparaison entre lesdites caractéristique(s) de déviation de référence sélectionnée(s) et de première déviation comprend la comparaison entre eux desdits histogrammes.

3. Procédé de contrôle dans le fonctionnement d'un système électronique (1) selon la revendication 1 ou 2, comprenant les étapes suivantes :
- pendant la phase préalable, mise en œuvre d'un deuxième processus d'apprentissage machine générant, en fonction de données d'entrée d'apprentissage comprenant des valeurs successives HPC et des actions correspondantes de la liste déterminée, un deuxième modèle algorithmique ;
- ledit deuxième modèle algorithmique fournit en sortie, en fonction de données d'entrée dudit deuxième modèle comprenant lesdites valeurs de HPC, une représentation de chaque valeur HPC de laquelle a été supprimé ce qui est décorrélé des actions de la liste d'actions déterminée ; et
- le premier modèle algorithmique (20) est appris, lors du premier processus d'apprentissage machine, sur la base des représentations, fournies par le deuxième modèle algorithmique, de valeurs successives HPC.

4. Programme d'ordinateur comportant des instructions logicielles qui, lorsqu'elles sont exécutées par un ordinateur, mettent en œuvre un procédé selon l'une quelconque des revendications précédentes.

5. Dispositif de contrôle (10) du fonctionnement d'un système électronique (1) comprenant un ensemble (11) d'applicatif(s), un processeur (15) sur lequel chaque applicatif de l'ensemble d'applicatif(s) s'exécute suite à des actions d'utilisateur du système, le système calculant alors des valeurs successives de compteur(s) d'un ensemble des compteur(s) de performance HPC du processeur prises suite auxdites actions d'utilisateur ;
ledit dispositif de contrôle étant adapté pour prédire, par un premier modèle algorithmique, des valeurs prochaines de HPC en fonction de données d'entrée dudit modèle comprenant des valeurs calculées courantes de HPC ; ledit premier modèle étant issu d'un premier processus d'apprentissage machine mis en œuvre lors d'une phase préalable et générant, en fonction de données d'entrée d'apprentissage comprenant des valeurs successives HPC, ledit premier modèle algorithmique (20) ;
ledit dispositif de contrôle étant adapté pour vérifier la conformité de fonctionnement du système en fonction de caractéristique(s) d'une première déviation calculée entre des premières valeurs calculées des compteurs de performance HPC du processeur et des premières valeurs de HPC prédites ; ledit dispositif de contrôle étant adapté pour déclencher dès détection d'une non-conformité ;
ledit dispositif de contrôle étant adapté pour prédire par ledit premier modèle algorithmique des valeurs prochaines de HPC en fonction de valeurs courantes de HPC et au moins d'actions d'utilisateur, les données d'entrée dudit premier modèle comprenant en outre les actions d'utilisateur et ledit premier modèle ayant été appris, pendant la phase préalable, sur des données d'entrée dudit premier apprentissage machine comprenant en outre au moins des actions d'utilisateur parmi une liste d'actions déterminées,
le dispositif de contrôle étant adapté pour, lors de la phase préalable et à l'issue de la phase d'entraînement, pour obtenir, pendant des fenêtres de test, des séries temporelles de valeurs de compteurs HPC de test et des actions respectives d'utilisateur associées ;
ledit dispositif de contrôle étant **caractérisé en ce que**:
J ledit dispositif étant adapté pour fournir, pour chaque série temporelle de test obtenue associée à une action d'utilisateur, prédire, par le modèle algorithmique, une série temporelle correspondante de valeurs de HPC en fonction de ladite série temporelle obtenue et de l'action d'utilisateur associée, pour calculer la déviation entre chaque série temporelle de test obtenue et la série temporelle de valeurs prédites correspondante et pour déterminer, en fonction desdites déviations calculées, une base de données de déviations de référence indiquant, pour chaque action utilisateur de la liste déterminée, des caractéristiques respectives de déviation de référence ;
ledit dispositif de contrôle étant adapté pour, lors de la phase ultérieure, sélectionner dans la base de données de déviations de référence, les caractéristique(s) de déviation de référence correspondant à une action d'utilisateur associée auxdites premières valeurs courantes et comparer lesdites caractéristique(s) de déviation de référence sélectionnée(s) et celles de première déviation.

6. Dispositif de contrôle (10) selon la revendication précédente, dans lequel la caractéristique de déviation de référence, respectivement de première déviation, comprend un histogramme de référence du nombre d'occurrences des déviations en fonction des valeurs de déviations, et le dispositif de contrôle est adapté pour comparer lesdites caractéristique(s) de déviation de référence sélectionnée(s) et de première déviation en comparant entre eux desdits histogrammes.

7. Dispositif de contrôle (10) dans le fonctionnement d'un système électronique (1) selon la revendication 5 ou 6, adapté pour, pendant la phase préalable, mettre en œuvre un deuxième processus d'apprentissage machine générant, en fonction de données d'entrée d'apprentissage comprenant des valeurs successives HPC et des actions correspondantes de la liste déterminée, un deuxième modèle algorithmique ; ledit dispositif de contrôle étant adapté pour fournir, par ledit deuxième modèle algorithmique, en fonction de données d'entrée dudit deuxième modèle comprenant lesdites valeurs de HPC, une représentation de chaque valeur HPC de laquelle a été supprimé ce qui est décorrélé des actions de la liste d'actions déterminée ; et ledit dispositif de contrôle étant adapté pour apprendre le premier modèle algorithmique (20), lors du premier processus d'apprentissage machine, sur la base des représentations, fournies par le deuxième modèle algorithmique, de valeurs successives HPC.

8. Système électronique (1) comprenant un ensemble (11) d'applicatif(s), un processeur (15) sur lequel chaque applicatif de l'ensemble d'applicatif(s) s'exécute suite à des actions d'utilisateur du système, le système calculant des valeurs successives de compteur(s) d'un ensemble de compteur(s) de performance HPC du processeur prises suite auxdites actions d'utilisateur, le système électronique comportant un dispositif de contrôle selon l'une des revendications 5 à 7.

## Patentansprüche

1. Steuerungsverfahren des Betriebs eines elektronischen Systems (1), umfassend einen Satz (11) von Anwendungsprogramm(en), einen Prozessor (15), auf dem jedes Anwendungsprogramm des Satzes von Anwendungsprogramm(en) infolge von Benutzeraktionen des Systems ausgeführt wird, wobei das System aufeinanderfolgende Zählerwerte eines Satzes von Prozessor-HPC-Leistungszählern berechnet, die infolge Benutzeraktionen genommen werden;
das Verfahren umfassend während einer operativen Steuerungsphase die folgenden Schritte:
- Vorhersagen, durch ein erstes algorithmisches Modell, von bevorstehenden HPC-Werten abhängig von Eingangsdaten des Modells, umfassend aktuelle berechnete HPC-Werte; wobei das erste Modell aus einem ersten Prozess maschinellen Lernens stammt, der in einer vorherigen Phase implementiert wird und abhängig von Lerneingangsdaten, umfassend aufeinanderfolgende HPC-Werte, das erste algorithmische Modell (20) erzeugt;
- Überprüfen der Betriebskonformität des Systems durch ein elektronisches Steuermodul (17) abhängig von Merkmal(en) einer ersten berechneten Abweichung zwischen ersten berechneten Werten der HPC-Leistungsindikatoren des Prozessors und ersten HPC-Werten, die durch das erste algorithmische Modell vorhergesagt werden; und Auslösen eines Alarms durch das elektronische Steuermodul, sobald eine Nichtkonformität erkannt wird;
die Eingangsdaten des ersten Modells während der Betriebsphase ferner umfassend mindestens Benutzeraktionen, wobei das bestimmte erste algorithmische Modell zukünftige HPC-Werte abhängig von aktuellen HPC-Werten und mindestens von Benutzeraktionen vorhersagt; wobei das erste Modell während der vorherigen Phase auf Eingangsdaten des ersten maschinellen Lernens gelernt wurde, ferner umfassend mindestens Benutzeraktionen aus einer Liste von bestimmten Aktionen,
wobei das Verfahren **dadurch gekennzeichnet ist, dass**:
wobei in der vorherigen Phase und nach Abschluss der Trainingsphase die folgenden Schritte mittels eines elektronischen Verarbeitungsmoduls (10) durchgeführt werden:
- Erlangen, während Testfenstern, von Zeitreihen von HPC-Test-Zählerwerten und den jeweiligen assoziierten Benutzeraktionen;
- für jede erlangte Testzeitreihe, die mit einer Benutzeraktion assoziiert ist, Bereitstellen einer entsprechenden Zeitreihe von vorhergesagten HPC-Werten durch das algorithmische Modell abhängig von der erlangten Zeitreihe und der assoziierten Benutzeraktion;
- Berechnen der Abweichung zwischen jeder erlangten Testzeitreihe und der entsprechenden Zeitreihe der vorhergesagten Werte;
- Bestimmen, abhängig von den berechneten Abweichungen, einer Referenzabweichungsdatenbank, die für jede Benutzeraktion der bestimmten Liste die jeweiligen Referenzabweichungsmerkmale angibt;
und wobei in der nachfolgenden Phase die Nichtkonformitätserkennung Folgendes umfasst:
- das Auswählen von Referenzabweichungsmerkmal(en) aus der Referenzabweichungsdatenbank, die einer Benutzeraktion entsprechen, die mit den ersten aktuellen Werten assoziiert ist; und
- das Vergleichen zwischen dem/den ausgewählten Referenzabweichungsmerkmal(en) und der ersten Abweichung.

2. Steuerungsverfahren im Betrieb eines elektronischen Systems (1) nach dem vorherigen Anspruch, wobei das jeweilige Referenzabweichungsmerkmal bzw. das Erstabweichungsmerkmal ein Referenzhistogramm der Anzahl von Auftreten von Abweichungen abhängig von Abweichungswerten umfasst und das Vergleichen zwischen dem/den ausgewählten Referenzabweichungsmerkmal(en) und dem/den Erstabweichungsmerkmal(en)en das Vergleichen der Histogramme untereinander umfasst.

3. Steuerungsverfahren im Betrieb eines elektronischen Systems (1) nach Anspruch 1 oder 2, umfassend die folgenden Schritte:
- während der vorherigen Phase, Ausführen eines zweiten Prozess maschinellen Lernens, der abhängig von Lerneingangsdaten, umfassend aufeinanderfolgende HPC-Werte und entsprechende Aktionen der bestimmten Liste, ein zweites algorithmisches Modell erzeugt;
- wobei das zweite algorithmische Modell abhängig von Eingangsdaten des zweiten Modells, umfassend die HPC-Werte, eine Darstellung von jedem HPC-Wert ausgibt, aus dem jener entfernt wurde, der nicht mit den Aktionen in der bestimmten Aktionsliste übereinstimmt; und
- das erste algorithmische Modell (20) in dem ersten Prozess maschinellen Lernens basierend auf Darstellungen aufeinanderfolgender HPC-Werte gelernt wird, die von dem zweiten algorithmischen Modell bereitgestellt werden.

4. Computerprogramm, umfassend Softwareanweisungen, die, wenn sie von einem Computer ausgeführt werden, ein Verfahren nach einem der vorherigen Ansprüche implementieren.

5. Steuervorrichtung (10) des Betriebs eines elektronischen Systems (1), umfassend einen Satz (11) von Anwendungsprogramm(en), einen Prozessor (15), auf dem jedes Anwendungsprogramm des Satzes von Anwendungsprogramm(en) infolge von Benutzeraktionen des Systems ausgeführt wird, wobei das System dann aufeinanderfolgende Zählerwerte eines Satzes von HPC-Leistungszählern des Prozessors berechnet, die infolge der Benutzeraktionen genommen werden;
wobei die Steuervorrichtung angepasst ist, um durch ein erstes algorithmisches Modell kommende HPC-Werte abhängig von Eingangsdaten des Modells, umfassend aktuelle berechnete HPC-Werte, vorherzusagen; wobei das erste Modell aus einem ersten Prozess maschinellen Lernens stammt, der in einer vorherigen Phase implementiert wird und abhängig von Lerneingangsdaten, umfassend aufeinanderfolgende HPC-Werte, das erste algorithmische Modell (20) erzeugt;
wobei Steuervorrichtung angepasst ist, um die Betriebskonformität des Systems abhängig von Merkmal(en) einer ersten berechneten Abweichung zwischen ersten berechneten Werten der HPC-Leistungsindikatoren des Prozessors und ersten vorhergesagten HPC-Werten zu überprüfen; wobei die Steuervorrichtung angepasst ist, um bei Erkennung einer Nichtkonformität ausgelöst zu werden;
wobei die Steuervorrichtung angepasst ist, um durch das erste algorithmische Modell kommende HPC-Werte abhängig von aktuellen HPC-Werten und mindestens Benutzeraktionen vorherzusagen, die Eingangsdaten des ersten Modells ferner umfassend die Benutzeraktionen und wobei das erste Modell während der vorherigen Phase auf Eingangsdaten des ersten maschinellen Lernens gelernt wird, ferner umfassend mindestens Benutzeraktionen aus einer Liste von bestimmten Aktionen,
wobei die Steuervorrichtung angepasst ist, um in der vorherigen Phase und nach Abschluss der Trainingsphase während Testfenstern Zeitreihen von Werten von Test-HPC-Zählern und assoziierten jeweiligen Benutzeraktionen zu erlangen;
wobei die Steuervorrichtung **dadurch gekennzeichnet ist, dass**:
die Vorrichtung angepasst ist um, für jede erlangte Testzeitreihe, die mit einer Benutzeraktion assoziiert ist, durch das algorithmische Modell eine entsprechende Zeitreihe von HPC-Werten abhängig von der erlangten Zeitreihe und der assoziierten Benutzeraktion vorherzusagen, um die Abweichung zwischen jeder erlangten Testzeitreihe und der entsprechenden Zeitreihe vorhergesagter Werte zu berechnen und um abhängig von den berechneten Abweichungen eine Referenzabweichungsdatenbank zu bestimmen, die für jede Benutzeraktion in der bestimmten Liste jeweilige Referenzabweichungsmerkmale angibt;
wobei die Steuervorrichtung angepasst ist, um ist, in der nachfolgenden Phase aus der Referenzabweichungsdatenbank die Referenzabweichungsmerkmal(e) auszuwählen, die einer Benutzeraktion entsprechen, die mit den ersten aktuellen Werten assoziiert ist, und die ausgewählte(n) Referenzabweichungsmerkmal(e) und die der ersten Abweichung zu vergleichen.

6. Steuervorrichtung (10) nach dem vorherigen Anspruch, wobei das jeweilige Referenzabweichungsmerkmal bzw. das Erstabweichungsmerkmal ein Referenzhistogramm der Anzahl von Auftreten von Abweichungen abhängig von Abweichungswerten umfasst, und die Steuervorrichtung angepasst ist, um die ausgewählte(n) Referenzabweichungsmerkmal(e) und die erste Abweichung zu vergleichen, indem sie die genannten Histogramme miteinander vergleicht.

7. Steuervorrichtung (10) im Betrieb eines elektronischen Systems (1) nach Anspruch 5 oder 6, die angepasst ist, um während der vorherigen Phase einen zweiten Prozess maschinellen Lernens zu implementieren, der abhängig von Lerneingangsdaten, umfassend aufeinanderfolgende HPC-Werte und entsprechende Aktionen aus der bestimmten Liste, ein zweites algorithmisches Modell zu erzeugen; wobei die Steuervorrichtung angepasst ist, um durch das zweite algorithmische Modell abhängig von Eingangsdaten des zweiten Modells, die die HPC-Werte umfassen, eine Darstellung jedes HPC-Werts bereitzustellen, aus dem jener entfernt wurde, der nicht mit den Aktionen in der bestimmten Aktionsliste übereinstimmt; und wobei die Steuervorrichtung angepasst ist, um das erste algorithmische Modell (20) während des ersten Prozesses maschinellen Lernens basierend auf den durch das zweite algorithmische Modell bereitgestellten Darstellungen aufeinanderfolgender HPC-Werte zu lernen.

8. Elektronisches System (1), umfassend einen Satz (11) von Anwendungsprogramm(en), einen Prozessor (15), auf dem jedes Anwendungsprogramm des Satzes von Anwendungsprogramm(en) infolge von Benutzeraktionen des Systems ausgeführt wird, wobei das System aufeinanderfolgende Zählerwerte eines Satzes von HPC-Leistungszählern des Prozessors berechnet, die infolge der Benutzeraktionen genommen werden, das elektronische System umfassend eine Steuervorrichtung nach einem der Ansprüche 5 bis 7.

## Claims

1. A method for monitoring the operation of an electronic system (1) comprising a set (11) of applications, a processor (15) on which each application of the set of applications is executed following user actions of the system, the system calculating successive counter values of a set of performance counters HPC of the processor taken following said user actions;
said method comprising the following steps during an operational monitoring phase:
- prediction by a first algorithmic model of next HPC values depending on input data of said model comprising current calculated HPC values; said first model being derived from a first machine learning process implemented during a preliminary phase and generating, depending on training input data comprising successive HPC values, said first algorithmic model (20);
- verify the compliance of the system operation by an electronic control module (17) depending on characteristic(s) of a first calculated deviation between first calculated values of the processor HPC performance counters and first HPC values predicted by the first algorithmic model; and triggering an alert by said electronic control module upon detection of a non-compliance;
during the operational phase, the input data of said first model further comprising at least user actions, said first determined algorithmic model predicts next HPC values depending on current HPC values and at least user actions; said first model having been trained, during the preliminary phase, on input data of said first machine learning further comprising at least user actions from among a list of determined actions,
said method being **characterized in that**:
according to which, during the preliminary phase and at the end of the training phase, the following steps are implemented using an electronic processing module (10):
- obtaining, during test windows, time series of test HPC counter values and respective associated user actions;
- for each obtained test time series associated with a user action, providing, by the algorithmic model, a corresponding time series of predicted HPC values depending on said obtained time series and the associated user action;
- calculating the deviation between each obtained test time series and the corresponding predicted value time series;
- determining, depending on said calculated deviations, a reference deviation database indicating, for each user action of the determined list, respective reference deviation characteristics;
and according to which during the subsequent phase, the detection of non-compliance comprises:
- selecting, in the reference deviation database, reference deviation characteristic(s) corresponding to a user action associated with said first current values; and
- comparing said selected reference deviation characteristic(s) with the first deviation.

2. The method for monitoring the operation of an electronic system (1) according to the preceding claim, according to which the reference deviation characteristic, respectively of a first deviation, comprises a reference histogram of the number of occurrences of deviations depending on deviation values and the comparison between said selected reference deviation characteristic(s), and a first deviation comprises the comparison between those of said histograms.

3. The method for monitoring the operation of an electronic system (1) according to claim 1 or 2, comprising the following steps:
- during the preliminary phase, implementing a second machine learning process generating, depending on training input data comprising successive HPC values and corresponding actions of the determined list, a second algorithmic model;
- said second algorithmic model provides as output, depending on the input data of said second model comprising said HPC values, a representation of each HPC value from which has been removed, what is decorrelated from the actions of the determined action list; and
- the first algorithmic model (20) is trained, during the first machine learning process, depending on the representations, provided by the second algorithmic model of successive HPC values.

4. A computer program including software instructions which, when executed by a computer, implement a method according to any one of the preceding claims.

5. The monitoring device (10) for the operation of an electronic system (1) comprising a set (11) of applications, a processor (15) on which each application of the set of applications is executed following user actions of the system, the system then calculating successive values of counters of a set of performance counters HPC of the processor taken following said user actions;
said monitoring device being able to predict, by a first algorithmic model, next HPC values depending on input data of said model comprising current calculated HPC values; said first model being derived from a first machine learning process implemented during a preliminary phase and generating, depending on training input data comprising successive HPC values, said first algorithmic model (20);
said monitoring device being able to verify the compliance of the system operation depending on characteristic(s) of a first calculated deviation between first calculated values of the processor HPC performance counters and first predicted HPC values; said monitoring device being able to trigger detection of a non-compliance;
said monitoring device being able to predict by said first algorithmic model next HPC values depending on current HPC values and at least user actions, the input data of said first model further comprising user actions and said first model having been trained, during the preliminary phase, on data input of said first machine learning further comprising at least user actions from among a list of determined actions,
the monitoring device being able to, during the preliminary phase and at the end of the training phase, obtain, during test windows, time series of test HPC counter values and respective associated user actions;
said monitoring device being **characterized in that**:
said device being able to provide, for each obtained test time series associated with a user action, predict, by the algorithmic model, a corresponding time series of HPC values depending on said obtained time series and the associated user action, to calculate the deviation between each obtained test time series and the corresponding predicted value time series and to determine, depending on said calculated deviations, a reference deviation database indicating, for each user action of the determined list, the respective reference deviation characteristics;
said monitoring device being able to, during the subsequent phase, select in the reference deviation database, the reference deviation characteristic(s) corresponding to a user action associated with said first current values and compare said selected reference deviation characteristic(s) and those of the first deviation.

6. The monitoring device (10) according to the previous claim, wherein the reference deviation characteristic, respectively of the first deviation, comprises a reference histogram of the number of occurrences of deviations depending on the deviation values, and the monitoring device is able to compare said selected reference deviation characteristic(s) and first deviation by comparing between them said histograms.

7. The monitoring device (10) in the operation of an electronic system (1) according to claim 5 or 6, able to, during the preliminary phase, implement a second machine learning process generating, depending on training input data comprising successive HPC values and corresponding actions of the determined list, a second algorithmic model; said monitoring device being able to provide, by said second algorithmic model, depending on input data of said second model comprising said HPC values, a representation of each HPC value from which has been removed what is decorrelated from the actions of the determined action list; and said monitoring device being able to train the first algorithmic model (20), during the first machine learning process, depending on the representations, provided by the second algorithmic model, of successive HPC values.

8. An electronic system (1) comprising a set (11) of applications, a processor (15) on which each application of the set of applications is executed following user actions of the system, the system calculating the successive counter values of a set of performance counters HPC of the processor taken following said user actions, the electronic system including a monitoring device according to one of claims 5 to 7.
